# EUROPÄISCHE PATENTSCHRIFT

(11) **EP 0 704 385 B1**
(45) Veröffentlichungstag und Bekanntmachung des Hinweises auf die Patenterteilung: **03.02.1999**
(21) Anmeldenummer: 95114291.8
(22) Anmeldetag: 12.09.1995
(51) Int. Cl.: B65D 77/06

(54) **Palettenbehälter für den Transport und die Lagerung von Flüssigkeiten**
Palletised container for the transport and storage of liquids
Palette-conteneur pour le transport et le stockage de liquides

(30) Priorität: 14.09.1994 DE 9414911 U
(43) Veröffentlichungstag der Anmeldung: 03.04.1996
(73) Patentinhaber: PROTECHNA S.A., 1701 Fribourg (CH)
(72) Erfinder: Schütz, Udo, D-56242 Selters / Ww. (DE)
(74) Vertreter: Pürckhauer, Rolf, Dipl.-Ing.

(56) Entgegenhaltungen:
- EP-A- 0 443 500
- DE-A- 4 041 748
- DE-A- 4 206 945
- DE-A- 4 209 781
- DE-U- 9 414 911

## Beschreibung

Die Erfindung betrifft Palettenbehälter für den Transport und die Lagerung von Flüssigkeiten, mit einem Innenbehälter aus Kunststoff oder Blech mit einer verschließbaren Befüllöffnung und einer Entnahme- und Spülöffnung zum Anschluß einer Entnahmearmatur, der einen Ablaufboden und einen als Gitter- oder Blechmantel ausgebildeten Außenmantel aufweist und in einer als Palette ausgebildeten, flachen Bodenwanne aus Blech steht.

Die Notwendigkeit zur Einsparung von Rohstoffen sowie von Transport- und Lagerkosten und die gesetzlichen Umweltschutzvorschriften zwingen die einschlägige Industrie dazu, Flüssigkeiten zum Transport und zur Lagerung in großvolumigen, auf dem Markt angebotenen, als Mehrwegbehälter einsetzbaren Behältern der gattungsgemäßen Art nach der DE - C - 42 06 945 anstatt wie bisher in Fässern mit wesentlich geringerem Fassungsvermögen abzufüllen.

Dem gattungsgemäßen Palettenbehälter haftet der Nachteil an, daß der Auslaufbereich der aus Stahlblech hergestellten Bodenwanne unter der Entnahmearmatur des Kunststoff-Innenbehälters beim Transport von aggressiven Flüssigkeiten durch die Einwirkung von bei der Entnahme heruntertropfender Flüssigkeit und von durch eine undichte Entnahmearmatur aus dem Innenbehälter heraustropfender Flüssigkeit korrodiert.

Der Erfindung liegt die Aufgabe zugrunde, einen wirksamen Schutz gegen aggressive Flüssigkeiten für den Auslaufbereich der Bodenwanne des gattungsgemäßen Palettenbehälters zu entwickeln.

Diese Aufgabe ist erfindungsgemäß gelöst durch einen Palettenbehälter mit den Merkmalen des Patentanspruches 1.

Die Unteransprüche beinhalten zweckmäßige Weiterbildungen der Erfindung.

Die erfindungsgemäße Abdeckung des Auslaufbereiches der aus Blech hergestellten Bodenwanne unter der Entnahmearmatur des Kunststoff-Innenbehälters durch ein Formteil, das bei einer Beschädigung leicht ausgetauscht werden kann, stellt einen einfachen und wirksamen Schutz des Auslaufbereiches der Bodenwanne gegen durch die Entnahmearmatur austretende, aggressive Flüssigkeiten dar.

Aus der DE-A-42 09 781 ist ein Container bekannt, der bevorzugt für den Transport und die Lagerung von Säuren, Laugen u.dgl. aggressiven Flüssigkeiten eingesetzt wird. Der Container besteht aus einer als Gitterbox ausgebildeten Palettenbox mit einem Bodenrahmen aus Hutprofilstäben, einem als Kunststoff-Blasformteil hergestellten, hohlkissenförmigen Bodeneinsatz, der auf den Bodenrahmen der Palettenbox aufgelegt ist, sowie einem auf dem kissenförmigen Einsatz stehenden Kunststoff-Innenbehälter mit einem im Bodenbereich angeordneten Auslaßventil. Der als Hohlkissen ausgebildete Bodeneinsatz aus Kunststoff, auf dem der Innenbehälter steht, bildet eine zum Auslaßventil des Innenbehälters hin nach oben offene, rinnenförmige Kissenpartie.

Im Hinblick darauf, daß der den Innenbehälter aufnehmende, hohlkissenartige Bodeneinsatz aus Kunststoff hergestellt ist, ist ein besonderer Schutz des Bodeneinsatzes im Bereich des Auslaßventils des Innenbehälters gegen aggressive Flüssigkeit nicht erforderlich, so daß der DE-A-42 09 781 kein Hinweis auf die Ausstattung der Bodenwanne aus Blech des gattungsgemäßen Palettenbehälters mit einem Schutz gegen aggressive Flüssigkeiten zu entnehmen ist.

Der neue Palettenbehälter ist nachfolgend anhand von Zeichnungen erläutert. Es zeigt
- Fig. 1: eine perspektivische Darstellung des Palettenbehälters,

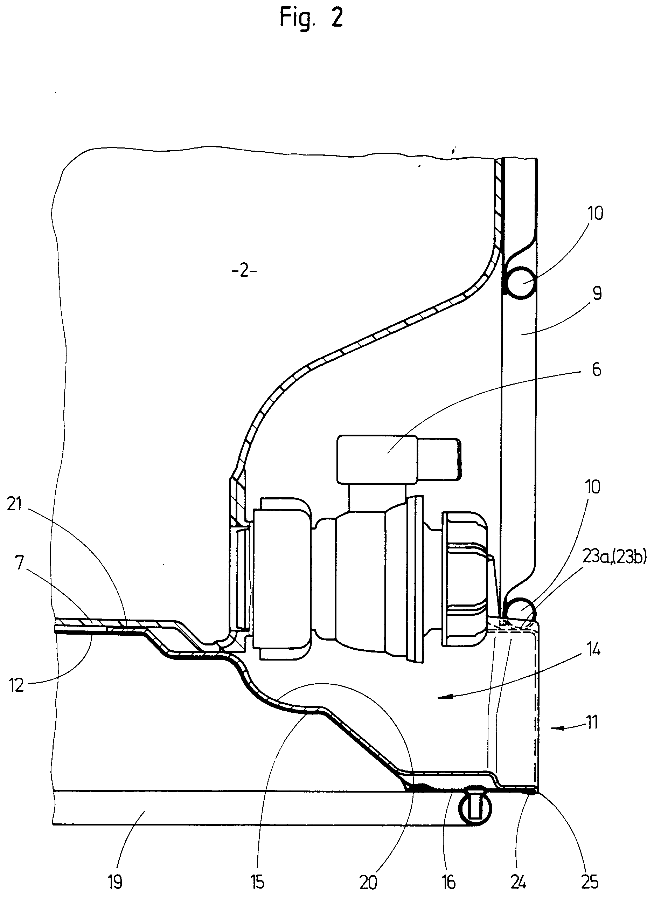

- Fig. 2: einen Längsschnitt durch den Auslaufbereich des Behälters in vergrößerter Darstellung und

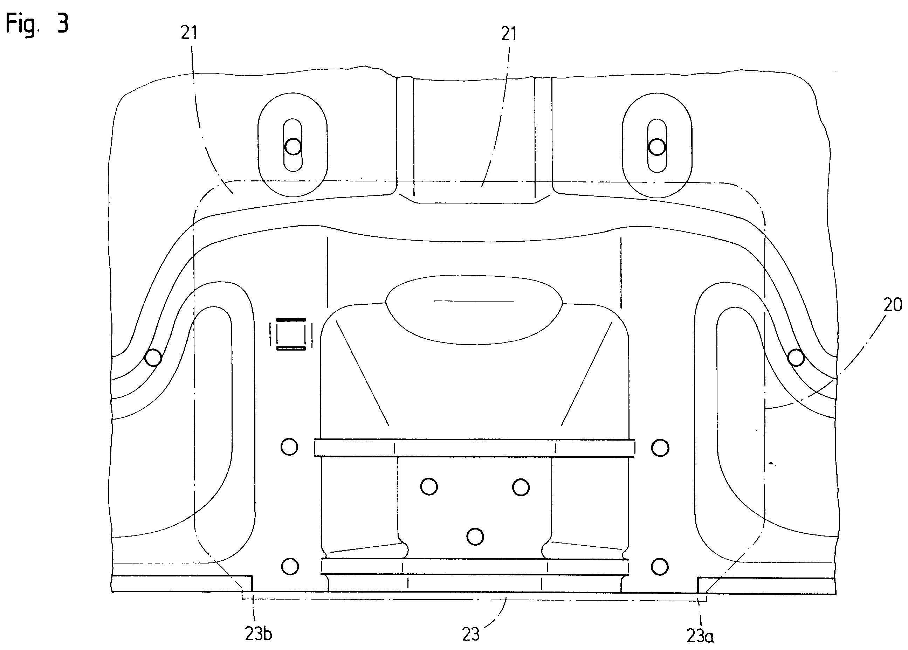

- Fig. 3: eine vergrößerte Draufsicht auf den Auslaufbereich der Bodenwanne des Behälters.

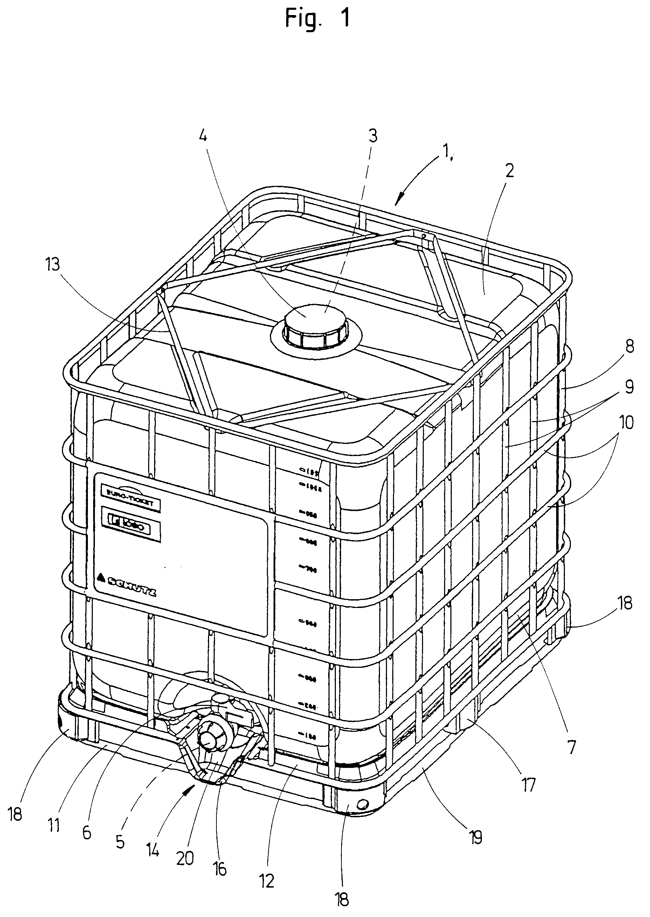

Der als Ein- und Mehrwegbehälter verwendete Palettenbehälter 1 nach Fig. 1 für den Transport und die Lagerung von Flüssiggut weist als Hauptbauteile einen austauschbare, quaderförmigen Innenbehälter 2 aus Polyethylen mit abgerundeten Ecken, der mit einem durch einen Schraubdeckel 4 verschließbaren Einfüllstutzen 3 und einem Auslaufstutzen 5 mit einem Entnahmehahn 6 sowie einem Ablaufboden 7 ausgestattet ist, einen Außenmantel 8 aus sich kreuzenden senkrechten und waagerechten Gitterstäben 9, 10 aus Metall, eine als flache Bodenwanne 12 aus Blech ausgebildete Palette 11 mit euronormgerechten Längen- und Breitenabmessungen zur formschlüssigen Aufnahme des Kunststoff-Innenbehälters 2 sowie einen oberen Rahmen 13 aus diagonal angeordneten Rohrstreben zur Versteifung des Gittermantels 8 und zum Schutz des Innenbehälters 2 auf.

In den Auslaufbereich 14 der Bodenwanne 12 unter dem Entnahmehahn 6 des Innenbehälters 2 ist eine muldenartige, nach vorne offene Vertiefung 15 eingeformt, die einen Mittelfuß 16 mit einem U-förmigen Querschnittsprofil bildet, mit dem die Bodenwanne 12 zusammen mit drei weiteren Mittelfüßen 17 und vier Eckfüßen 18 auf dem Palettenrahmen 19 steht.

Der Auslaufbereich 14 der Bodenwanne 12 ist durch ein Formteil 20 aus einem gegen aggressive Flüssigkeiten beständigen Kunststoff abgedeckt, das das Blechmaterial der Bodenwanne 12 gegen eine Korrosion durch bei der Entnahme aus dem Innenbehälter 2 heruntertropfende Flüssigkeit und durch aus einem undichten Entnahmehahn 6 heraustropfende Flüssigkeit beim Transport und der Lagerung von aggressiven Flüssigkeiten mit bzw. in dem Palettenbehälter 1 schützt.

Das Formteil 20 ist mit seinem hinteren Innenrandbereich 21 zwischen dem Innenbehälter 2 und der Bodenwanne 12 eingeklemmt und mit den auf dem Außenrand 22 der Bodenwanne 12 aufliegenden Abschnitten 23a, 23b seines äußeren Randes 23 zusammen mit dem Gittermantel 8 mit der Bodenwanne 12 verschraubt.

Der äußere Rand 23 des Formteils 20 weist eine über den äußeren Rand 24 der Vertiefung 15 des Auslaufbereiches 14 der Bodenwanne 12 nach unten vorstehende Abtropfkante 25 auf.

## Patentansprüche

1. Palettenbehälter für den Transport und die Lagerung von Flüssigkeiten, mit einem Innenbehälter aus Kunststoff oder Blech mit einer verschließbaren Befüllöffnung und einer Entnahme- und Spülöffnung zum Anschluß einer Entnahmearmatur, der einen Ablaufboden und einen als Gitter- oder Blechmantel ausgebildeten Außenmantel aufweist und in einer als Palette ausgebildeten, flachen Bodenwanne aus Blech steht, dadurch gekennzeichnet, daß die Bodenwanne (12) im Auslaufbereich (14) unter dem Entnahmehahn (6) des Innenbehälters (2) eine an sich bekannte, muldenartige, nach vorne offene Vertiefung (15) aufweist, die einen Mittelfuß (16) mit einem U-förmigen Querschnittsprofil bildet, mit dem die Bodenwanne (12) zusammen mit drei weiteren Mittelfüßen (17) und vier Eckfüßen (18) auf dem Palettenrahmen (19) steht, und daß ausschließlich der Auslaufbereich (14) der Bodenwanne (12) durch ein Formteil (20) aus einem gegen aggressive Flüssigkeiten beständigen Material wie Kunststoff abgedeckt ist.

2. Palettenbehälter nach Anspruch 1, dadurch gekennzeichnet, daß das Formteil (20) mit seinem hinteren Innenrandbereich (21) zwischen dem Innenbehälter (2) und der Bodenwanne (12) eingeklemmt ist.

3. Palettenbehälter nach Anspruch 1 und 2, dadurch gekennzeichnet, daß das Formteil (20) mit den auf dem Außenrand (22) der Bodenwanne (12) aufliegenden Abschnitten (23a, 23b) seines äußeren Randes (23) zusammen mit dem Außenmantel (8) mit der Bodenwanne (12) verschraubt ist.

4. Palettenbehälter nach einem der Ansprüche 1 bis 3, dadurch gekennzeichnet, daß der äußere Rand (23) des Formteils (20) eine über den äußeren Rand (24) der Vertiefung (15) des Auslaufbereiches (14) der Bodenwanne (12) nach unten vorstehende Abtropfkante (25) aufweist.

## Claims

1. A palletised container for transport and storage of liquids, with an inner container of plastics material or sheet metal, with a closable filling opening and a discharge and rinsing opening for attachment of a discharge fitting, which comprises a draining bottom and an outer jacket formed from mesh or sheet metal and stands in a flat bottom tray of sheet metal formed as a pallet, characterized in that the bottom tray (12) has a trough-like depression (14) known per se below the discharge tap (6) of the inner container (2) and open to the front, which forms a middle foot (16) with a U-shaped cross-sectional profile, with which the bottom tray (12) stands on the pallet frame (19) together with three further middle feet (17) and four corner feet (18), and in that only the draining region (14) of the bottom tray (12) is covered by a moulded part (20) of a material such as a plastics material which is resistant to aggressive liquids.

2. A palletised container according to claim 1, characterized in that the moulded part (20) is clamped with its rear, inner edge region (21) between the inner container (2) and the bottom tray (12).

3. A palletised container according to claim 1 or 2, characterized in that the moulded part (20) is bolted together with the outer jacket (8) to the bottom tray (12) with the sections (23a, 23b) of its outer edge (23) lying on the outer edge (22) of the bottom tray (12)

4. A palletised container according to any of claims 1 to 3, characterized in that the outer edge (23) of the moulded part (20) comprises a drip edge (25) projecting down over the outer edge (24) of the depression (15) of the draining region (14) of the bottom tray (12).

## Revendications

1. Récipient à palette pour le transport et le stockage de liquides, comportant un récipient intérieur en matière plastique ou en tôle ayant une ouverture de remplissage pouvant être fermée et une ouverture de prélèvement et de nettoyage pour le raccordement d'un robinet de prélèvement, le récipient intérieur comportant un fond d'écoulement et une surface latérale extérieure réalisée en surface latérale grillagée ou en surface latérale en tôle et se tenant dans une cuvette de fond plate en tôle, réalisée en palette, caractérisé en ce que la cuvette (12) de fond comporte dans la région (14) de sortie, au-dessous du robinet (6) de prélèvement du récipient (2) intérieur, un renfoncement (15) connu en soi, en forme de creux, ouvert vers l'avant, qui forme un pied (16) médian de profil de section transversale en forme de U et par lequel la cuvette (12) de fond se tient, conjointement par trois pieds (17) médians supplémentaires et quatre pieds (18) d'angle, sur le cadre (19) de palette, et en ce qu'exclusivement la région (14) de sortie de la cuvette (12) de fond est recouverte dune pièce (20) moulée en un matériau qui résiste aux liquides agressifs, comme de la matière plastique.

2. Récipient à palette suivant la revendication 1, caractérisé en ce que la pièce (20) moulée est coincée par sa région (21) de bord intérieur arrière entre le récipient (2) intérieur et la cuvette (12) de fond.

3. Récipient à palette suivant la revendication 1 et 2, caractérisé en ce que la pièce (20) moulée est vissée, conjointement avec la surface (8) latérale extérieure, à la cuvette (12) de fond par les tronçons (23a, 23b) de son bord (23) extérieur, qui reposent sur le bord (22) extérieur.

4. Récipient à palette suivant l'une des revendications 1 à 3, caractérisé en ce que le bord (23) extérieur de la pièce (20) moulée comporte un bord (25) d'égouttement en saillie vers le bas sur le bord (24) extérieur du renfoncement (15) de la région (14) de sortie de la cuvette (12) de fond.
